# EUROPEAN PATENT APPLICATION

(11) **EP 4 138 514 A1**
(43) Date of publication of application: **22.02.2023**
(21) Application number: 21812421.2
(22) Date of filing: 01.04.2021
(51) Int. Cl.: H04W 88/06, H04W 36/14

(54) **NETWORK SEARCH METHOD, ELECTRONIC DEVICE, CHIP, AND STORAGE MEDIUM**

(30) Priority: 25.05.2020 CN 202010450180
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Ipside
(86) International application number: PCT/CN2021/085093
(87) International publication number: WO 2021/238406

(57) **Abstract**

Disclosed are a network search method, an electronic device, a chip, and a storage medium. The network search method comprises: when ready to initiate a data service, detecting a real-time state corresponding to a network search timer; if the real-time state is a running state, determining the current resident network; setting a network search duration according to the current resident network, and carrying out network search processing according to the network search duration and a preset network priority list; and if a first network is obtained by means of the network search processing, switching to the first network, and processing the data service by means of the first network, wherein the priority of the first network is greater than the priority of the current resident network. A high-frequency network search is realized, transmission efficiency during a data service process is improved, and the terminal performance is further improved.

## Description

### CROSS-REFERENCE TO RELATED APPLICATIONS

The present disclosure claims priority of Chinese Patent Application No. 202010450180.9, titled "NETWORK SEARCH METHOD, ELECTRONIC DEVICE, CHIP, AND STORAGE MEDIUM", filed on May 25, 2020, the contents of which are hereby incorporated by reference.

### TECHNICAL FIELD

The present disclosure relates to the field of communication technologies, and in particular, to a network search method, an electronic device, a chip and a storage medium.

### BACKGROUND

With development of wireless technologies, a wireless mobile communication network has experienced the evolution from a second generation mobile communication system (2G), a third generation mobile communication system (3G), a fourth generation mobile communication system (4G) to a fifth generation mobile communication system (5G). With increasing popularity of a New Radio (NR) technology, more and more intelligent terminals can support NR mode to enjoy high-speed data services.

At present, an operator network, i.e., a public land mobile network (PLMN), often provide a variety of access networks using different radio access technologies (RAT), making wireless electronic devices in mobile communication networks, such as smart phones, generally support a variety of RATs. However, under some specific circumstances, an electronic device may temporarily reside on low priority RAT network (such as 2G/3G/4G) in the home PLMN (HPLMN) where the electronic device belongs for a period of time. In order to enable the user equipment (UE) to return to a high priority RAT network (such as 5G) in the HPLMN for efficient data service transmission, a timer timeout mechanism is often used to trigger re-search of the high priority RAT network, that is, background search.

However, on the one hand, before the background network search is started, a data service of a terminal can only be carried on a resident low priority RAT network. On the other hand, because background network search must give way to the data service, the background network search cannot be performed during performing the data service, resulting in the data service being carried on a low priority RAT network where the terminal resides for a long time. It can be seen that the background network search mechanism of related art has a low search frequency, and data transmission efficiency in the data service process of electronic device is low, thereby reducing performance of electronic device and leading to poor user experience.

### SUMMARY

Some embodiments of the present disclosure provide a network search method, an electronic device, a chip and a storage medium, thereby realizing high-frequency network search, improving a transmission speed in the data service process, further improving the performance of electronic device, and improving the user experience.

The technical solutions of some embodiments of the present disclosure are implemented as follows.

In a first aspect, some embodiments of the present disclosure provide a network search method. The method includes: detecting a real-time state corresponding to a network search timer in response to a data service being ready to be started; determining a current resident network in response to the real-time state being running; setting network search duration according to the current resident network, and performing a network search process according to the network search duration and a preset network priority list; and switching to a first network, and processing the data service through the first network in response to obtaining the first network through the network search process; wherein priority of the first network is higher than priority of the current resident network.

In a second aspect, some embodiments of the present disclosure provide a network search method. The method includes: detecting a the real-time state corresponding to a network search timer in response to processing a data service through a current resident network; setting a first preset time threshold according to the current resident network, and simultaneously detecting first processing duration corresponding to the data service in response to the real-time state is running; performing a network search process according to the preset network priority list in response to the first processing duration being greater than or equal to the first preset time threshold; and switching to a first network, and processing the data service through the first network in response to obtaining the first network through the network search process; wherein priority of the first network is higher than priority of the current resident network.

In a third aspect, some embodiments of the present disclosure provide an electronic device. The electronic device includes a detection assembly, a determination assembly, a setting assembly, a search assembly, a switching assembly, and a processing assembly. The detection assembly is configured to detect a real-time state corresponding to a network search timer in response to a data service being ready to be started. The determination assembly is configured to determine a current resident network in response to the real-time state being the running state. The setting assembly is configured to set network search duration according to the current resident network. The search assembly is configured to perform a network search process according to the network search duration and a preset network priority list. The switching assembly is configured to switch to a first network in response to the first network being obtained through the network search process; wherein priority of the first network is higher than priority of the current resident network. The processing assembly is configured to process the data service through the first network.

In a fourth aspect, some embodiments of the present disclosure provide an electronic device. The electronic device includes a detection assembly, a setting assembly, a search assembly, a switching assembly and a processing assembly. The detection assembly is configured to detect a real-time state corresponding to a network search timer in response to the data service being processed through the current resident network. The setting assembly is configured to set a first preset time threshold according to the current resident network in response to the real-time state is running. The detection assembly is configured to detect first processing duration corresponding to the data service. The search assembly is configured to perform a network search process according to a preset network priority list in response to the first processing duration being greater than or equal to the first preset time threshold. The switching assembly is configured to switch to the first network in response to the first network being obtained through the network search process; wherein priority of the first network is higher than priority of the current resident network. The processing assembly is configured to process the data service through the first network.

In a fifth aspect, some embodiments of the present disclosure provide an electronic device. The electronic device includes a processor and a memory storing executable instructions of the processor. When the instructions are executed by the processor, any of the network search methods described above is implemented.

In a sixth aspect, some embodiments of the present disclosure provide a chip. The chip includes programmable logic circuits and/or program instructions. When the chip is running, the network search method described above is implemented.

In a seventh aspect, some embodiments of the present disclosure provide a computer-readable storage medium on which a program is stored and applied to electronic devices. When the program is executed by a processor, the network search method described above is implemented.

Some embodiments of the present disclosure provide a network search method, an electronic device, a chip and a storage medium. A real-time state corresponding to a network search timer can be detected in response to a data service being ready to be started. A current resident network is determined in response to the real-time state being running. Network search duration is set according to the current resident network, and a network search process is performed according to the network search duration and a preset network priority list. A first network is switched to and the data service is processed through the first network in response to the first network being obtained through the network search process. Priority of the first network is higher than priority of the current resident network. The real-time state corresponding to the network search timer is detected in response to the data service is processed through the current resident network. A first preset time threshold is set according to the current resident network, and the first processing duration corresponding to the data service is simultaneously detected in response to the real-time state being running. The network search process is performed according to the preset network priority list in response to the first processing duration being greater than or equal to the first preset time threshold. A first network is switched to and the data service is processed through the first network in response to the first network being obtained through the network search process. The priority of the first network is higher than the priority of the current resident network.

That is, in some embodiments of the present disclosure, in response to the electronic device detecting the network search timer is running in a preparation starting stage of the data service, the electronic device first performs the network search process, and switches to the first network with priority higher than the current resident network priority obtained through the network search process to process the data service. In a processing stage of the data service, that is, when processing the data service through the current resident network, in response to the electronic device detecting that the network search timer is running, the electronic device will simultaneously detect the corresponding processing duration of the data service on the current resident network, and in response to the processing duration meeting the preset time threshold corresponding to the current resident network, the electronic device will perform the network search process again, and switch to the first network with priority higher than the priority of the current resident network obtained through the network search process to process the data service. To sum up, when the data service is ready to start, the electronic device first performs the network search process, and starts to process the data service through the high priority network obtained through the network search process. When the data service has been started, in order to prevent the data service from being carried on the current resident network for a long time, the electronic device performs the network search process and continues to process the data service through the high priority network obtained through the network search process in response to the corresponding processing duration of the data service meeting the preset time threshold, thereby realizing high frequency network search, improving transmission efficiency in the data service process, further improving terminal performance, and enhancing the user experience.

### BRIEF DESCRIPTION OF THE DRAWINGS

In order to make the technical solution described in embodiments the present disclosure more clearly, the drawings used for the description of the embodiments will be described. For those skilled in the art, other drawings may be acquired according to the drawings without any creative work.
FIG. 1 is a schematic diagram of a background network search process of related art.
FIG. 2 is a schematic diagram of a communication system architecture provided by some embodiments of the present disclosure.
FIG. 3 is a structure schematic diagram 1 of an electronic device provided by some embodiments of the present disclosure.
FIG. 4 is an implementation flow chart 1 of a network search method provided by some embodiments of the present disclosure.
FIG. 5 is a schematic diagram of a network search process provided by some embodiments of the present disclosure.
FIG. 6 is a schematic diagram 1 of a network search process provided by some embodiments of the present disclosure.
FIG. 7 is an implementation flow chart 2 of a network search method provided by some embodiments of the present disclosure.
FIG. 8 is an implementation flow chart 3 of a network search method provided by some embodiments of the present disclosure.
FIG. 9 is an implementation flow chart 4 of a network search method provided by some embodiments of the present disclosure.
FIG. 10 is a schematic diagram 2 of a network search process provided by some embodiments of the present disclosure.
FIG. 11 is an implementation flow chart 5 of a network search method provided by some embodiments of the present disclosure.
FIG. 12 is a structure schematic diagram 2 of an electronic device provided by some embodiments of the present disclosure.
FIG. 13 is a structure schematic diagram 3 of an electronic device provided by some embodiments of the present disclosure.

### DETAILED DESCRIPTION OF THE PREFERRED EMBODIMENTS

The technical solutions in the embodiments of the present disclosure are clearly and completely described in conjunction with the drawings in the embodiments of the present disclosure. It is understood that the specific embodiments described herein are only used to explain the relevant disclosure, not to limit the present disclosure. It should also be noted that, for the convenience of description, only the parts related to the relevant disclosure are shown in the drawings.

With development of wireless technologies, a wireless mobile communication network has experienced the evolution from a second generation mobile communication system (2G), a third generation mobile communication system (3G), a fourth generation mobile communication system (4G) to a fifth generation mobile communication system (5G). With increasing popularity of a New Radio (NR) technology, more and more intelligent electronic devices can support NR mode to enjoy high-speed data services.

At present, an operator network, i.e., a public land mobile network (PLMN), often provide a variety of access networks using different radio access technologies (RAT), making wireless electronic devices in mobile communication networks, such as smart phones, generally support a variety of RATs. However, under some specific circumstances, due to mobile phone performance or the electronic device temporarily passing through an area with poor NR signal, the terminal may temporarily reside on low priority RAT network (such as 2G/3G/4G) in the home PLMN (HPLMN) where the electronic device belongs for a period of time. In order to enable the UE to return to a high priority RAT network (such as 5G) in the HPLMN for efficient data service transmission, a high priority RAT (HPRAT) timer timeout mechanism is often used to trigger re-search of the high priority RAT network in HPLMN, that is, background search.

In the related art, duration of a HPRAT timer is generally subject to duration of a high priority PLMN (HPPLMN) timer. In some embodiments, the duration of the HPPLMN timer is preset in a file of a USIM card, and is measured in minutes. That is to say, when the UE can return to the high priority RAT network (such as 5G) in the HPLMN completely depends on time of the HPPLMN timer. Specifically, background network search mechanisms of related art generally include "fixed background network search" and "stepped background network search". The duration of the HPRAT timer in "fixed background network search" is the same as the duration of the HPPLMN timer. A network search device performs a background network search every full fixed duration (for example, 2min) according to the duration of the HPRAT timer. The "stepped background network search" is to adjust the duration of the HPRAT timer from traditional fixed duration to stepped duration. For example, if the duration of the HPPLMN timer is 2min, then in the "stepped background network search", initial duration of the HPRAT timer can be seconds (for example, 30 seconds), and then gradually increase to minutes (for example, 1min). Maximum duration of the HPPLMN timer can be set to 2min. Compared with "fixed background network search", search frequency of "stepped background network search" is relatively higher, thereby speeding up the time for UE to return to the high priority RAT network in HPLMN.

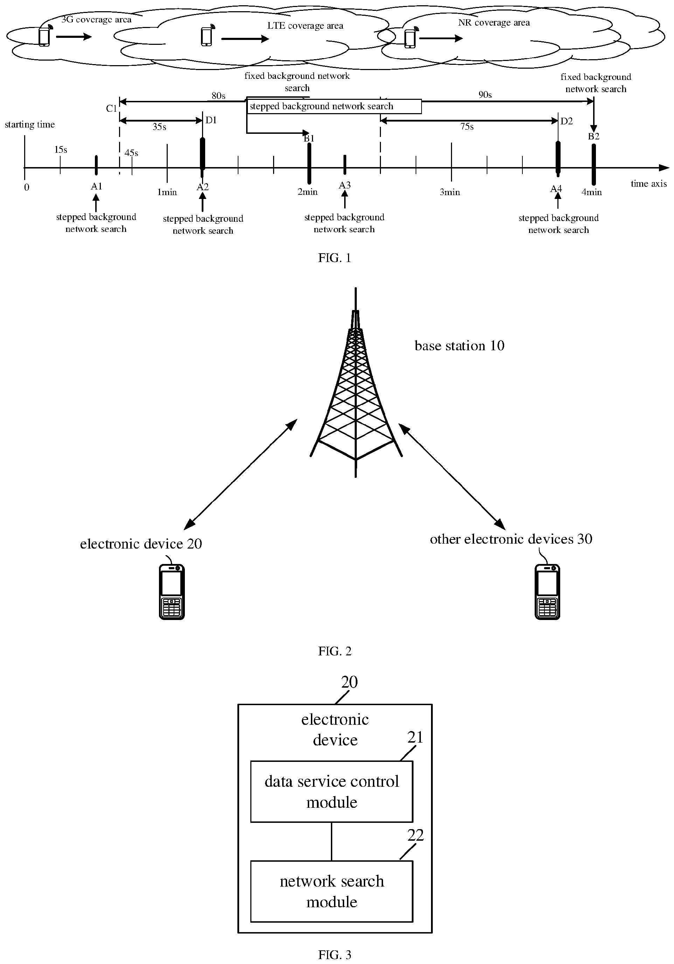

FIG. 1 is a schematic diagram of a background network search process of related art. As shown in FIG. 1, the UE accesses an area with only 3G signals at starting time, moves to an area covered by Long Term Evolution (LTE) after 40s (C1 point), and moves to an area covered by NR signals after 2.5min (C2 point). When a current resident network of the terminal is 3G, if the terminal starts "fixed background network search", that is to say, the terminal uses the traditional HPRAT timer to perform a background network search for a fixed duration (for example, 2min), that is, at points B1 and B2, UE acquires LTE signals at B1 and NR signals at B2 within the 4-minute range shown in FIG. 1; and if the terminal starts "stepped background network search", the terminal can perform a background network search at 30s (A1 point), at 45s (A2 point), at 1min (A3 point), at 1min30s (A4 point), at 2min ..., that is, initial duration of HPRAT timer is 30s, and then gradually increases to 45s, 1min, 1min30s..., then the UE acquires the LTE signals at D1 and the NR signals at D2 within the 4-minute range shown in FIG. 1.

Further, as shown in FIG. 1, since the LTE signals are turned on at C1, the NR signals are turned on at C2 point. If the "fixed background network search" is adopt, time difference between the B1 point when the terminal obtains the LTE signals and C1 point when actual LTE signals are turned on is 80 seconds, and time difference between the B2 point when the terminal obtains the NR signals and the C2 point when actual NR signals are turned on is 90 seconds. If the "stepped background network search" is adopted, time difference between the D1 point when the terminal acquires the LTE signals and the C1 point when the actual LTE signals are turned on is 35s, and time difference between the D2 point when the terminal acquires NR signals and the C2 point when the actual NR signals are turned on is 75s. In contrast, the "stepped background network search" really speeds up the time for the terminal to return to the high priority RAT network in HPLMN to a large extent.

However, as shown in FIG. 1, in the "fixed background network search" and the "stepped background network search", if the terminal is in a low priority RAT network (3G), and the UE starts a data service from C1 point to D1 point, then the data service of the terminal can only be carried on the low priority RAT network (3G) where the terminal currently resides before the background network search (A2 point) is started, and because the background network search must give way to the data service, the background network search cannot be performed during a data service process. That is, if the data service continues for a long time until and does not end until a few minutes later, even if the HPRAT timer has timed out (such as A2 point, A3 point, A4 point), and the LTE/NR signals have been turned on successively, the background network search cannot be performed, resulting in the data service being carried on the low priority RAT network (3G) where the terminal currently resides for a long time. For users, a most obvious disparity between a "low priority RAT network HPLMN" and a "high priority RAT network in HPLMN" is reflected in that a transmission speed increases exponentially in the data service process. Therefore, the background network search mechanism of related art still has the defect of low network search frequency, thereby making the data transmission efficiency in the terminal data service process low, reducing the terminal performance and leading to poor user experience.

In order to solve the problems in the background network search mechanism of related art, some embodiments of the present disclosure provide a network search method, electronic device, chip and storage medium. Specifically, at a preparation starting stage of the data service, in response to an electronic device detecting that a network search timer is running, the electronic device first performs a network search process and switches to a first network obtained through the network search process to process the data service, and priority of the first network is higher than priority of a current resident network. At a processing stage of the data service, that is, when the data service is processed through a current resident network, in response to the electronic device detecting that the network search timer is running, a network device simultaneously detects processing duration of the data service on the current resident network, and when the processing duration meets a preset time threshold corresponding to the current resident network, the network device performs the network search process again, and switches to a second network obtained through the network search process to process the data service, and priority of the second network is higher than priority of the current resident network. That is, when the data service is ready to start, the electronic device first performs the network search process, and starts to process the data service through the high priority network obtained through the network search process. When the data service has been started, in order to prevent the data service from being carried on the current resident network for a long time, when the processing duration corresponding to the data service meets the preset time threshold, the network device performs the network search process, and continues to process the data service through the high priority network obtained through the network search process, thereby realizing high-frequency network search, improving the transmission efficiency in the data service process, further improving the terminal performance, and improving the user experience.

It should be understood that the technical solutions of the embodiments of the present disclosure can be applied to various communication systems, such as: Global System of Mobile communication (GSM) system, Code Division Multiple Access (CDMA) system, Wideband Code Division Multiple Access (WCDMA) system, General Packet Radio Service (GPRS), LTE system, Universal Mobile Telecommunication System (UMTS), and other current communication systems, as well as, in particular, the 5G system of the fifth generation mobile communication technology.

FIG. 2 is a schematic diagram of a communication system architecture provided by some embodiments of the present disclosure. As shown in FIG. 2, the communication system can include a base station 10, an electronic device 20, and other electronic devices 30. The base station 10 can provide communication coverage for a specific geographical area, and can communicate with the electronic device 20 and other electronic devices 30 located in the coverage area. In at least one embodiment, the base station 10 can be an evolutionary network device (Evolutional Node B, eNB or eNodeB) in the LTE system, or a network device in a 5G network or a network device in a future communication system, or a wireless controller in a cloud radio access network (CRAN), or the base station 10 can be a mobile switching center, a relay station, an access point, or the like, which is not limited in the present disclosure.

In at least one embodiment, the electronic device 20 can be an access terminal device, a UE, a user unit, a user station, a mobile station, a mobile apparatus, a remote station, a remote terminal device, a mobile device, a user terminal device, a terminal device, a wireless communication device, a user agent or a user device. The terminal can be a cellular phone, a cordless phone, a session initiation protocol (SIP), a Wireless Local Loop (WLL) station, a Personal Digital Assistant (PDA), a handheld device with wireless communication function, a computing device or other processing device connected to a wireless modem, an on-board device, a wearable device, a terminal device in 5G network, a terminal device in a public land mobile network (PLMN) that will evolve in the future, or the like.

The technical solutions in some embodiments of the present disclosure will be described more fully below with reference to the relevant drawings.

Some embodiments of the present disclosure provide a network search method for the electronic device 20 shown in FIG. 3. FIG. 3 is a structure schematic diagram 1 of an electronic device provided by some embodiments of the present disclosure. As shown in FIG. 3. In some embodiments of the present disclosure, the electronic device 20 includes a data service control module 21 and a network search module 22. The data service control module is configured to monitor starting, continuing and ending stages of the data service, and notify the network search module 22 of a real-time state of the data service. In addition, the data service control module 21 is also configured to receive a notification message of controlling data service states sent by the network search module 22, and then suspend the data service or start the data service. The network search module 22 is configured to detect operation states of the network search timer, i.e., the HPRAT timer, and receive the data service state sent by the data service control module 21, and perform different network search processes according to different data service states in response to detecting that the real-time state corresponding to the HPRAT timer is running.

In some embodiments of the present disclosure, the data service control module can exchange information with the network search module through "handshake". Specifically, the data service control module can monitor data service states in real time, including the preparation starting stage of the data service, that is, a data service starting stage, a data service started stage, that is, a data service continuing stage, and the data service end stage, and notify the data service state to the network search module through "handshake", such that the network search module can know the current data service state.

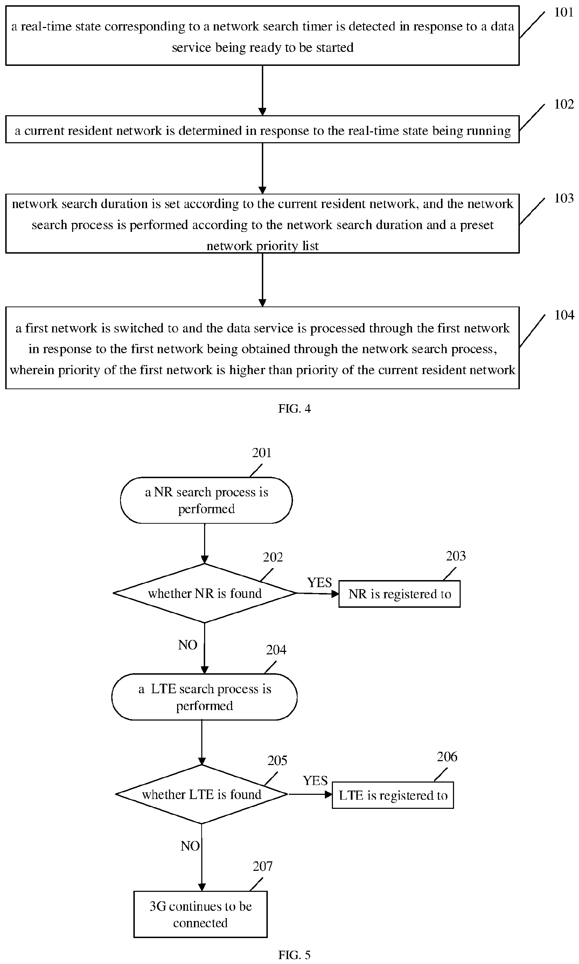

FIG. 4 is an implementation flow chart 1 of a network search method provided by some embodiments of the present disclosure. As shown in FIG. 4, in some embodiments of the present disclosure, the method for an electronic device to perform network search can include the following operations illustrated at blocks.

At block 101, a real-time state corresponding to a network search timer is detected in response to a data service being ready to be started.

In some embodiments of the present application, the electronic device can first detect the real-time state corresponding to the network search timer in response to the data service being ready to be started.

In some embodiments of the present disclosure, when a data control module monitors that the data service state is a starting stage, that is, when the data service is ready to be started, the data service control module can notify the network search module that the data service state is the starting stage. Under these circumstances, the network search module can first detect a real-time state corresponding to the network search timer.

It should be noted that in some embodiments of the present disclosure, the data service can be any one of entertainment, life and business data services realized by mobile communication networks such as General Packet Radio Service (GPRS), GSM, CDMA, LTE or NR, which is used by the electronic device. For example, the data service can provide users with news, weather, tourism or other information services. The data service can also be music, games, chat or other entertainment services. The data service can also be short message, e-mail or other message services. The data service can also be a mobile commerce service such as online transactions and micro payments. The present disclosure does not limit the specific categories of the data service.

In some embodiments of the present disclosure, the network search timer can be a HPRAT timer. Accordingly, when the network search module knows that the data service state corresponding to the data service is at a starting stage, the network search module can detect the operation state of the HPRAT timer, and determine that the real-time state corresponding to the HPRAT timer is running, or the HPRAT timer is not running.

Further, in some embodiments of the present disclosure, when the electronic device is ready to start the data service, the electronic device can further determine whether a current resident network is a high priority RAT network in the HPLMN or a low priority RAT network in the HPLMN after detecting the real-time state corresponding to the network search timer.

At block 102, a current resident network is determined in response to the real-time state being running.

In some embodiments of the present disclosure, when the electronic device is ready to start the data service, the electronic device detects the real-time state corresponding to the network search timer. The electronic device can first determine the current resident network in response to the real-time state being running.

It should be noted that in some embodiments of the present disclosure, the real-time state corresponding to the timer can be running or not running. When the electronic device currently resides on the low priority RAT in the HPLMN (for example, when NR is the highest priority, 2G/3G/4G is the low priority), the electronic device will start the network search timer. When the electronic device currently resides on the highest priority RAT in the HPLMN (for example, NR is the highest priority), the network search timer will not be started. It can be seen that if the real-time state of the network search timer is running, it indicates that the electronic device is currently residing on the low priority RAT network, and if the real-time state of the network search timer is not running, it indicates that the electronic device is currently residing on the highest priority RAT network.

Specifically, in some embodiments of the present disclosure, the electronic device can support a variety of RATs, such as 2G, 3G, LTE, or NR. Each RAT has corresponding priority. In at least one embodiment, the electronic device can store a preset network priority list, the preset network priority list can be stored in a file of a USIM card of the electronic device, or directly stored in a memory of the electronic device. Further, the electronic device can obtain the priority of the current resident network according to the preset network priority list and the current resident network by looking up the preset network priority list. For example, if a priority order of RAT in the preset network priority list is NR>LTE>3G>2G, it can be understood that NR is the highest priority RAT, 2G is the lowest priority, while the priority of LTE is higher than the priority of 3G and lower than the priority of NR, and the priority of 3G is higher than the priority of 2G and lower than the priority of LTE.

Furthermore, in some embodiments of the present disclosure, it can be considered that the current resident network of the electronic device is not the highest priority network in response to it being determined that the real-time state corresponding to the network search timer is running, thus the electronic device needs to search the high priority network. Under these circumstances, the electronic device can suspend the data service. In at least one embodiment, the network search module can first send the first control message to the data service control module. The first control message is configured to instruct the data service control module to control start of the data service, that is, suspend the start of the data service, and keep the data service state in an idle state.

In some embodiments of the present disclosure, it means that the electronic device resides on the highest priority network in response to it being detected that the real-time state corresponding to the network search timer is not running. Under these circumstances, the electronic device can start the data service. In at least one embodiment, the network search module can directly send the second control message to the data service control module. The second control message is configured to instruct the data service control module to start the data service. The electronic device can directly process the data service through the current resident network. The data service state will change from the idle state to a connected state. The data transmission efficiency of processing the data service based on the highest priority network is the highest.

Further, in some embodiments of the present disclosure, after the electronic device detects that the network search timer is running and determines the current resident network, the network search module can further perform the network search process.

At block 103, network search duration is set according to the current resident network, and the network search process is performed according to the network search duration and a preset network priority list.

In some embodiments of the present disclosure, after the electronic device detects that the network search timer is running and determines the current resident network, the electronic device can first set the network search duration according to the current resident network, and further perform the network search process according to the network search duration and the preset network priority list.

Specifically, in some embodiments of the present disclosure, the network search module can first determine the priority of the current resident network through the preset network priority list, and then set the network search duration corresponding to the current resident network according to the priority of the current resident network when performing the network search process. In at least one embodiment, the electronic device can establish a corresponding relationship between the network and the network search duration. In some embodiments, the higher the priority of the network, the shorter the corresponding network search duration. Correspondingly, the lower the priority of the network, the longer the corresponding network search duration.

Further, in some embodiments of the present disclosure, the electronic device can determine a network to be searched corresponding to the current resident network according to the preset network priority list and the current resident network. In some embodiments, the priority of the network to be searched is higher than the priority of the current resident network. It can be understood that the electronic device can determine other high priority networks that the network device needs to search and have higher priority than the current resident network according to the current resident network and the preset network priority list. For example, if the current resident network is 2G, it can be seen from the preset network priority list that the network to be searched corresponding to 2G is 3G/LTE/NR and other networks higher than the 2G network priority. If the current resident network is 3G, it can be seen from the preset network priority list that the network to be searched corresponding to 3G is LTE/NR and other networks higher than the 3G network priority. If the current resident network is LTE, the corresponding network to be searched is only the NR whose priority is higher than that of the LTE network.

In some embodiments of the present disclosure, the electronic device can be configured with a first timer to make different timing durations correspond to different network search durations. Specifically, different timing durations can be set by electronic device setting corresponding time parameters for the first timer through corresponding codes programming. It can be understood that different timing durations enable different network search durations to be set for different priority networks. Correspondingly, after the electronic device detects that the real-time state of the network search timer is running, the electronic device can start the first timer corresponding to the current resident network and perform the network search process during the first timer running.

In order to prevent bringing long delay to the data service, the electronic device should strictly control the network search duration. For example, in some embodiments of the present disclosure, if the current resident network is 2G and the corresponding network to be searched is 3G/LTE/NR or other networks, then the electronic device should search the NR/LTE/3G network as far as possible to try to leave 2G, thus the network search duration corresponding to 2G is set to a longer duration, such as 5s. If the current resident network is 3G, and the corresponding network to be searched is LTE/NR or other networks, then the electronic device needs to search NR/LTE to try to leave 3G. Since the priority of 3G network is higher than the priority of 2G network, the network search duration corresponding to 3G can be set less than the network search duration corresponding to 2G, for example, 3s. If the current resident network is LTE, then the corresponding network to be searched is only NR. Since the LTE network priority is second only to the NR network priority, then the electronic device only needs to search NR, thus the network search duration of the LTE network can be set a shorter duration, such as 1.5s.

Specifically, in some embodiments of the present disclosure, the electronic device can perform the network search process in an order of priority from high to low within the network search duration. That is to say, when the electronic device performs the network search process, the electronic device first searches a highest priority network. If the highest priority network is found, there is no need to search the network again. If the highest priority network is not found, the electronic device continues to search a next network to be searched with priority only lower than the highest priority, and so on. All the networks to be searched are researched within the network search duration.

For example, in some embodiments of the present disclosure, FIG. 5 is a schematic diagram of a network search process provided by some embodiments of the present disclosure. As shown in FIG. 5, assuming that the current resident network is a 3G network, the duration of the first timer is set to be 3s, and the corresponding network to be searched is the LTE/NR network, then the electronic device first searches a highest priority network NR to be searched within 3s (operations at block 201). Then the electronic device determines whether NR is found in 3s (operations at block 202), if NR network is found, the electronic device switches to NR directly (operations at block 203), and there is no need to continue searching, and if the NR network is not found, the network search module will continue to search for the next LTE network with priority only lower than the priority of the NR network (operations at block 204). The electronic device determines whether the LTE is found in 3s (operations at block 205), if the LTE network is found, the electronic device will directly switch to the LTE (operations at block 206), and there is no need to continue searching, and if the LTE network is not found, the electronic device maintains the connection with the 3G network (operations at block 207). The network search process is similar when the current resident network is 2G, except that the first network to be searched corresponding to 2G is 3G/NR/LTE network, which will not be repeated here.

Further, in some embodiments of the present disclosure, after the electronic device sets the network search duration according to the current resident network, and performs the network search process according to the network search duration and the preset network priority list, the electronic device can further process the data service through the obtained high priority network.

At block 104, a first network is switched to and the data service is processed through the first network in response to the first network being obtained through the network search process. Priority of the first network is higher than priority of the current resident network.

In some embodiments of the present disclosure, after the electronic device sets the network search duration according to the current resident network, and performs the network search process according to the network search duration and the preset network priority list, the electronic device can switch to the first network and process the data service through the first network in response to the first network being obtained through the network search process. In some embodiments, the priority of the first network is higher than the priority of the current resident network.

It should be noted that in some embodiments of the present disclosure, the first network can be the highest priority network, that is, a target network; or the priority of the first network can be higher than the priority of the current resident network and lower than the priority of the target network. In at least one embodiment, the electronic device has not obtained any network with priority higher than the priority of the current resident network through the network search process.

Specifically, in some embodiments of the present disclosure, as long as the priority of the first network obtained is higher than the priority of the current resident network, the electronic device can switch to the first network and process the data service through the first network. Under these circumstances, the network search process is completed and the first timer is closed.

Specifically, in some embodiments of the present disclosure, if no network with higher priority than the current resident network priority is obtained through the network search process, the network search process will be ended after the first timer times out. Under these circumstances, the electronic device maintains the connection with the current resident network and processes the data service through the current resident network.

Further, in some embodiments of the present disclosure, if the highest priority network is obtained through the network search process, the network search timer needs to be stopped when the data service is processed through the highest priority network, and there is no need to perform the network search process. If the first network that is not the highest priority network is obtained through the network search process, or the first network is not obtained, the network search timer is still running when the data service is processed, and the highest priority network continues to be searched.

For example, if the current resident network is a 3G network and the highest priority network NR is obtained through the network search process within the network search duration, the electronic device will stop the network search process, and also stop the HPRAT timer and the first timer, to directly register to the NR and perform the network search process through the NR. If the high priority network obtained is only the LTE network through the network search process, when the electronic device processes the data service through LTE, the HPRAT timer will still run until the NR network is obtained through the network search process and the NR network is switched to.

Similarly, if LTE/NR is not obtained through the network search process, the network search process will be ended after the first timer times out. The electronic device will continue to be connected to 3G and continue to perform the network search process through 3G. When the data service is processed through 3G, the HPRAT timer will still run until NR is obtained through the network search process and the NR network is switched to.

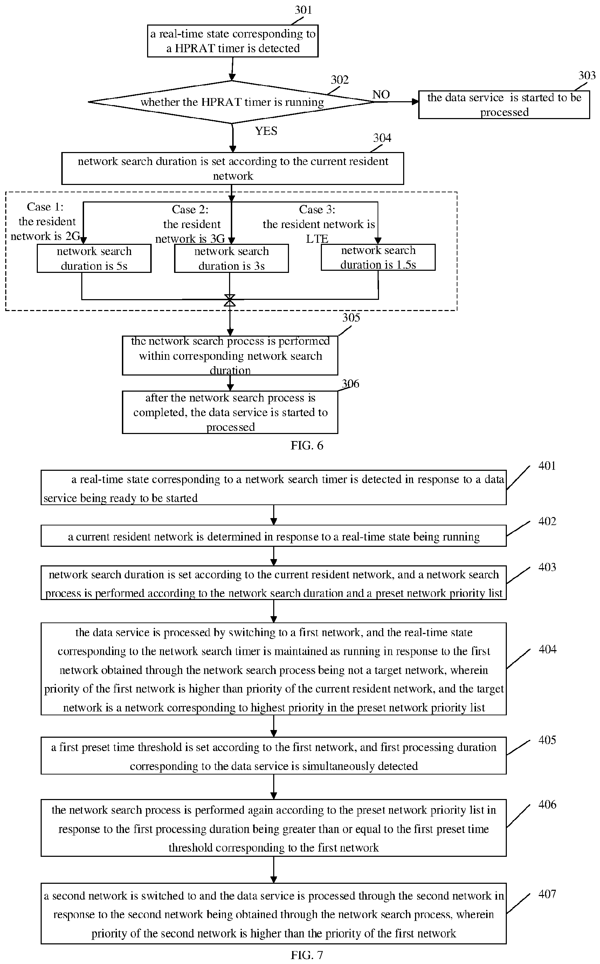

FIG. 6 is a schematic diagram 1 of a network search process provided by some embodiments of the present disclosure. As shown in FIG. 6, when a data service is ready to be started, an electronic device firsts detect a real-time state corresponding to a HPRAT timer (operations at block 301), and determines whether the HPRAT timer is running (operations at block 302); directly starts to process the data service in response to the HPRAT timer being not running (operations at block 303), that is, performs a network search process by a current resident network; and sets network search duration according to the current resident network in response to the HPRAT timer being running (operations at block 304). In at least one embodiment, the resident network is 2G, and the corresponding network search duration is 5s, the resident network is 3G, and the corresponding network search duration is 3s, the resident network is LTE, and the corresponding network search duration is 1.5s. Then the network search process is performed within corresponding network search duration (operations at block 305). After the network search process is completed, the data service is started to be processed (operations at block 306). Specifically, the data service is started by switching a high priority RAT network in response to the high priority RAT network being found. The data service continues to be processed with the current resident network in response to no high priority RAT network being found.

Some embodiments of the present disclosure provide a network search method. At a preparation starting stage of the data service, if the electronic device detects that the network search timer is running, the electronic device first performs the network search process, and switches to the first network to process the data service, and the first network is obtained through the network search process with priority higher than the current resident network priority. That is, when the data service is ready to start, the electronic device first performs the network search process, and processes the data service through the high priority network obtained through the network search process, thereby realizing high frequency network search, improving the transmission efficiency in the data service process, and further improving the performance of electronic device.

Based on the above embodiments, FIG. 7 is an implementation flow chart 2 of a network search method provided by some embodiments of the present disclosure. As shown in FIG. 7, in some embodiments of the present disclosure, the method for an electronic device to perform network search process can include the following operations illustrated at blocks.

At block 401, a real-time state corresponding to a network search timer is detected in response to a data service being ready to be started.

In some embodiments of the present disclosure, when the data service is ready to be started, the electronic device can first detect the real-time state corresponding to the network search timer.

In some embodiments of the present disclosure, the network search timer can be a HPRAT timer. Accordingly, when the network search module knows that the data service state corresponding to the data service is the starting stage, the network search module can detect an operation state of the HPRAT timer, and determine that the real-time state corresponding to the HPRAT timer is running, or the HPRAT timer is not running.

Further, in some embodiments of the present disclosure, when the electronic device is ready to start the data service, the electronic device can further determine whether the current resident network is a high priority RAT network in the HPLMN or a low priority RAT network in the HPLMN after detecting the real-time state corresponding to the network search timer.

At block 402, a current resident network is determined in response to a real-time state being running.

It should be noted that in some embodiments of the present disclosure, when the electronic device is ready to start the data service, after detecting the real-time state corresponding to the network search timer, the electronic device can first determine the current resident network in response to the real-time state corresponding to the network search timer being running.

It should be noted that in some embodiments of the present disclosure, the real-time state corresponding to the timer can be running or not running. If the real-time state of the network search timer is running, it indicates that the electronic device is currently residing on the low priority RAT network. If the real-time state of the network search timer is not running, it indicates that the electronic device is currently residing on the highest priority RAT network.

Further, in some embodiments of the present disclosure, if it is determined that the real-time state corresponding to the network search timer is running, it can be considered that the current resident network of the electronic device is not the highest priority network, thus the electronic device needs to search the high priority network. Under these circumstances, the electronic device can suspend starting the data service.

In some embodiments of the present disclosure, if it is detected that the real-time state corresponding to the network search timer is not running, it means that the electronic device resides on the highest priority network, and under this circumstance, the electronic device can start the data service.

Further, in some embodiments of the present disclosure, after the electronic device detects that the network search timer is running and determines the current resident network, the network search module can further perform the network search process.

At block 403, network search duration is set according to the current resident network, and a network search process is performed according to the network search duration and a preset network priority list.

In some embodiments of the present disclosure, after the electronic device detects that the network search timer is running and determines the current resident network, the electronic device can first set the network search duration according to the current resident network, and further performs the network search process according to the network search duration and the preset network priority list.

In at least one embodiment, the electronic device can establish a corresponding relationship between the network and the network search duration. In some embodiments, the higher the priority of the network, the shorter the corresponding network search duration. Correspondingly, the lower the priority of the network, the longer the corresponding network search duration.

Further, in some embodiments of the present disclosure, the electronic device can determine the network to be searched corresponding to the current resident network according to the preset network priority list and the current resident network. In some embodiments, the priority of the network to be searched is higher than the priority of the current resident network. Specifically, during the network search duration, the electronic device can perform the network search process on the search networks to be searched in an order of priority from high to low.

Further, in some embodiments of the present disclosure, after the electronic device sets the network search duration according to the current resident network, and performs the network search process according to the network search duration and the preset network priority list, the electronic device can further process the data service through the obtained high priority network.

At block 404, the data service is processed by switching to a first network, and the real-time state corresponding to the network search timer is maintained as running in response to the first network obtained through the network search process being not a target network. Priority of the first network is higher than priority of the current resident network. The target network is a network corresponding to highest priority in the preset network priority list.

In some embodiments of the present disclosure, after the electronic device performs the network search process according to the network search duration and the preset network priority list, in response to the first network obtained through the network search process being not the target network, the electronic device can process the data service by switching to the first network, and under this circumstance, the real-time state corresponding to the network search timer is maintained as the running sate.

It should be noted that, in some embodiments of the present disclosure, as long as the priority of the first network obtained is higher than the priority of the current resident network, the electronic device can switch to the first network and process the data service through the first network. Under these circumstances, the network search process is completed and the first timer is closed.

Further, the network search timer is still running when the data service is processed, and continues searching for the highest priority network in response to the first network that being not the highest priority network is obtained through the network search process.

Further, in some embodiments of the present disclosure, after the electronic device processes the data service by switching to the first network and maintains the real-time state corresponding to the network search timer as running, the electronic device can further detect the processing duration of the data service when the network search timer is running.

At block 405, a first preset time threshold is set according to the first network, and first processing duration corresponding to the data service is simultaneously detected.

In some embodiments of the present disclosure, after the electronic device processes the data service by switching to the first network and keeps the real-time state corresponding to the network search timer as running, the electronic device can set the first preset time threshold according to the first network, and simultaneously detect the first processing duration corresponding to the data service.

It should be noted that in some embodiments of the present disclosure, after the network search process is completed, the electronic device turns off the first timer. In order to prevent the data service being carried on the first network corresponding to low priority for a long time, the electronic device can set the time threshold corresponding to the network. Specifically, different time thresholds are set for different priority networks. For example, the first network corresponds to the first preset time threshold, that is, the data service is carried on the first network for the longest time. When processing the data service through the first network, the electronic device can detect the first processing duration corresponding to the data service. In at least one embodiment, the second timer can monitor the time of processing the data service through the first network. Under these circumstances, the timing duration corresponding to the second timer is the same as the first preset time threshold corresponding to the first network.

Further, in some embodiments of the present disclosure, after the electronic device processes the data service by switching to the first network and the first network obtained through the network search process is not the target network, the electronic device simultaneously detects the first processing duration corresponding to the data service, and can further compare the first processing duration and the first preset time threshold, and determine the time for the network search process by comparing the result.

At block 406, the network search process is performed again according to the preset network priority list in response to the first processing duration being greater than or equal to the first preset time threshold corresponding to the first network.

In some embodiments of the present disclosure, after the electronic device processes the data service by switching to the first network to and detects the first processing duration corresponding to the data service, the electronic device can perform network search process according to the preset network priority list in response to the first processing duration being greater than or equal to the first preset time threshold.

In some embodiments of the present disclosure, the electronic device can start the network search process through the second timer timeout mechanism. Specifically, during the electronic device starts the first processing duration corresponding to the second timer to monitor the data service, when electronic device monitors that the first processing duration is greater than or equal to the first preset time threshold corresponding to the current resident network, that is, when the second timer expires, the electronic device suspends processing the data service through the current resident network, converts the data service state to sleep, and performs the network search process.

Further, in some embodiments of the present disclosure, the electronic device can determine the network to be searched corresponding to the first network according to the preset network priority list and the first network. In some embodiments, the priority of the network to be searched is higher than the priority of the first network. Specifically, after the second timer times out, that is, when the first processing duration corresponding to the data service is greater than or equal to the first preset time threshold, the electronic device can perform the search network process in the order of priority from high to low.

Further, in some embodiments of the present disclosure, when the first processing duration is greater than or equal to the first preset time threshold, the electronic device can further process the data service through the obtained high priority network after performing the network search process according to the preset network priority list.

At block 407, a second network is switched to and the data service is processed through the second network in response to the second network being obtained through the network search process. Priority of the second network is higher than the priority of the first network.

In some embodiments of the present disclosure, when the first processing duration is greater than or equal to the first preset time threshold, the electronic device can switch to the second network and process the data service through the second network in response to the electronic device obtaining the second network through the network search process after performing the network search process according to the preset network priority list. The priority of the second network is higher than the priority of the first network.

Specifically, in some embodiments of the present disclosure, as long as the priority of the second network obtained is higher than the priority of the first network, the electronic device can switch to the second network and process the data service through the second network.

Further, in some embodiments of the present disclosure, the highest priority network continues to be searched in response to the second network being not obtained through the network search process when the data service is processed through the first network. Under these circumstances, the network search timer and the second timer are still running, the processing duration corresponding to the data service continues to be monitored through the second timer, and the network search process is performed again after the second timer times out until the highest priority network is found.

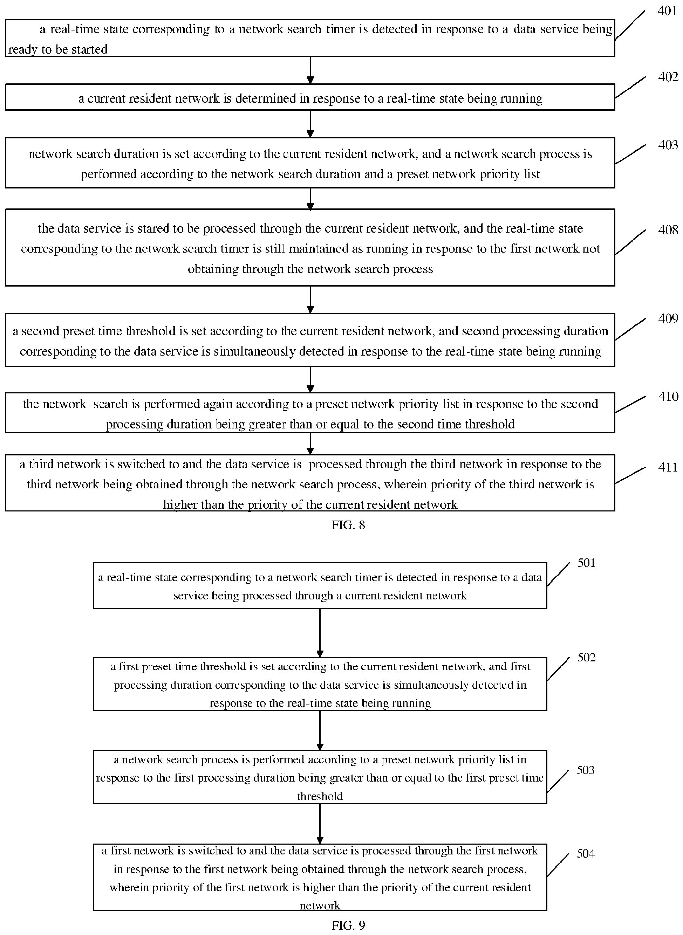

Further, in some embodiments of the present disclosure, FIG. 8 is an implementation flow chart 3 of a network search method provided by some embodiments of the present disclosure. As shown in FIG. 8, after the electronic device sets the network search duration according to the current resident network, and performs the network search process according to the network search duration and the preset network priority list, that is, after operations at block 403, in response to the electronic device not obtaining the first network through the network search process, that is, no network with a higher priority than the current resident network having been found, the electronic device needs to start to process the above data service through the current resident network. For example, the preset network priority among 3G, 4G and 5G is 3G<4G<5G. If the current resident network is 3G, and no 4G or 5G has been found after the network search process, the data service needs to be processed based on the 3G network. In addition, since the electronic device does not search the highest priority network, the real-time state corresponding to the network search timer is still maintained as running (operations at block 408). In order to prevent the data service being processed on the current resident network with low priority for a long time, the electronic device can set a time threshold, that is, a second preset time threshold, for processing the above data service by using the current resident network. Time for processing the data service through the current resident network, that is, a second processing duration, is simultaneously detected (operations at block 409). The electronic device performs the network search process again in response to the second processing duration being greater than or equal to the second preset time threshold. Specifically, the electronic device performs the network search process according to the preset network priority list (operations at block 410). The electronic device can switch from the current resident network to a third network, and process the data service through the third network in response to the electronic device obtaining the third network through the network search process again, and priority of the third network is higher than the priority of the current resident network (operations at block 411).

Some embodiments of the present disclosure provide a network search method. At a preparation starting stage of the data service, if the electronic device detects that the network search timer is running, the electronic device first performs the network search process, and switches to the first network to process the data service or still process the data service through the current resident network, and the first network is obtained through the network search process with priority higher than the current resident network priority. When the current network for processing the data service is not the highest priority network, in order to prevent the data service being carried on the low priority RAT network for a long time, the electronic device continues to detect the corresponding processing duration of the data service carried on the first network, and when the processing duration meets the preset time threshold corresponding to the first network, the electronic device forces to perform the network search process, and processes the data service by switching to the second network obtained through the network search process, and the priority of the second network is higher than the priority of the current resident network. That is, when the data service is ready to start, the electronic device gives priority to the network search process, and starts to process the data service through the high priority network obtained by the network search process. If the high priority network is not the highest priority network, in order to prevent the data service from being carried on the current resident network for a long time, when the processing duration corresponding to the data service meets the preset time threshold, the network device forces the network search process, thereby realizing high-frequency network search, improving the transmission efficiency in the data service process, further improving the performance of the electronic device, and improving the user experience.

Other embodiments of the present disclosure provide a network search method. FIG. 9 is an implementation flow chart 4 of a network search method provided by some embodiments of the present disclosure. As shown in FIG. 9, in some embodiments of the present disclosure, the method for an electronic device to perform a network search process can include the following operations illustrated at blocks.

At block 501, a real-time state corresponding to a network search timer is detected in response to a data service being processed through a current resident network.

In some embodiments of the present disclosure, the electronic device detects the real-time state corresponding to the network search timer in response to processing the data service through the current resident network.

In some embodiments of the present disclosure, when a data control module monitors that a data service state is at a continuing stage, that is, the data service has been carried out through the current resident network, the data service control module can notify a network search module that the data service state is the continuing stage. Under these circumstances, the network search module can first detect the real-time state corresponding to the network search timer.

In some embodiments of the present disclosure, the network search timer can be an HPRAT timer. Accordingly, when the network search module knows that the data service state corresponding to the data service is at a starting stage, the network search module can detect an operation state of the HPRAT timer, and determine that a real-time state corresponding to the HPRAT timer is running, or the HPRAT timer is not running.

Further, the electronic device can further determine whether the current resident network is a high priority RAT network in HPLMN or a low priority RAT network in HPLMN based on the real-time state of the search timer in response to processing the data service through the current resident network after detecting the corresponding real-time state of the search timer.

At block 502, a first preset time threshold is set according to the current resident network, and first processing duration corresponding to the data service is simultaneously detected in response to the real-time state being running.

In some embodiments of the present disclosure, when the electronic device processes the data service through the current resident network, after detecting the real-time state corresponding to the network search timer, the electronic device can set the first preset time threshold according to the current resident network, and simultaneously detect the first processing duration corresponding to the data service in response to the real-time state being running.

It should be noted that in some embodiments of the present disclosure, the real-time state corresponding to the timer can be running or not running. If the real-time state of the network search timer is running, it indicates that the electronic device is currently residing on the low priority RAT network. If the real-time state of the network search timer is not running, it indicates that the electronic device is currently residing on the highest priority RAT network.

In at least one embodiment, the electronic device can store a preset network priority list, the preset network priority list can be stored in a file of the USIM card of the electronic device, or directly stored in a memory of the electronic device. Further, the electronic device can obtain the priority of the current resident network according to the preset network priority list and the current resident network by looking up the preset network priority list.

Further, in some embodiments of the present disclosure, the current resident network of the electronic device can be considered as the highest priority network in response to the real-time state corresponding to the network search timer being determined as not running, thus there is no need for the electronic device to search the high priority network. Under these circumstances, the electronic device can continue to process the data service through the current resident network. In at least one embodiment, the network search module can directly send the second control message to the data service control module. The second control message is configured to instruct the data service control module to continue to process the data service through the current resident network, and the data service state remains connected. In some embodiments, data transmission efficiency of the data service process based on the highest priority RAT network is the highest.

In some embodiments of the present disclosure, in response to the real-time state corresponding to the network search timer being determined as running, the current resident network of the electronic device can be considered as not the highest priority network, thus the electronic device needs to search the high priority network. Specifically, the electronic device can first determine the priority of the current resident network through the preset network priority list, and further set the time threshold of the data service carried on the current resident network according to the priority of the current resident network, that is, the first preset time threshold corresponding to the current resident network. In at least one embodiment, the electronic device can establish a correspondence relationship between the network and a preset time threshold. In some embodiments, the higher the priority of the network, the larger the corresponding preset time threshold, that is, the longer it takes to process the data service through the network. Accordingly, the lower the priority of the network, the smaller the corresponding preset time threshold, that is, the shorter it takes to process the data service through the network.

In some embodiments of the present disclosure, the electronic device can be configured with a second timer to monitor the time of processing the data service through the network. Specifically, the preset time thresholds of different sizes can be corresponding time parameters for the second timer set by the electronic device through corresponding codes. It can be understood that, different timing durations enable different preset time thresholds to be set for different priority networks. Correspondingly, after the electronic device detects that the real-time state of the network search timer is running, the electronic device can start the second timer corresponding to the current resident network, and monitor the time for processing the data service through the current resident network during the first timer running.

For example, in some embodiments of the present disclosure, the electronic device should search the NR/LTE/3G network as far as possible to try to leave 2G in response to the current resident network being 2G, to prevent the data service being carried on the 2G network of low priority for a long time, and the preset time threshold should be set to a short time, for example, 1.5 min. The electronic device needs to search the NR/LTE network to try to leave 3G in response to the current resident network being 3G. Since priority of the 3G network is higher than priority of the 2G network, the preset time threshold corresponding to the 3G network can be greater than the preset time threshold corresponding to the 2G network, for example, 3min. Since the LTE network priority is second only to the NR network priority, the network search module only needs to search the NR in response the current resident network being LTE, thus the preset time threshold corresponding to the LTE network is longer, for example, 4 minutes.

Further, in some embodiments of the present disclosure, in response to the real-time state being running, the electronic device sets the first preset time threshold according to the current resident network, and after detecting the first processing duration corresponding to the data service at the same time, the electronic device compares the first processing duration and the first preset time threshold, and determines the time for network search processing by comparing the result.

At block 503, a network search process is performed according to a preset network priority list in response to the first processing duration being greater than or equal to the first preset time threshold.

In some embodiments of the present disclosure, when the real-time state of the network search timer is running, the electronic device can perform network search process according to the preset network priority list in response to the first processing duration being greater than or equal to the first preset time threshold after setting the first preset time threshold according to the current resident network and simultaneously detecting the first processing duration corresponding to the data service.

In some embodiments of the present disclosure, the electronic device can start the network search process by a second timer timeout mechanism. Specifically, when the electronic device monitors the data service by starting the first processing duration corresponding to the second timer, and when it is monitored that the first processing duration is greater than or equal to the first preset time threshold corresponding to the current resident network, that is, when the second timer expires, the electronic device suspends processing the data service through the current resident network, converts the data service state to sleep, and performs the network search process.

In some embodiments of the present disclosure, the data service will continue to be processed through the current resident network, and the data service state will remain connected in response to the first processing duration being less than the first preset time threshold.

Further, in some embodiments of the present disclosure, the electronic device can determine the network to be searched corresponding to the current resident network according to the preset network priority list and the current resident network. In some embodiments, the priority of the network to be searched is higher than the priority of the current resident network. It can be understood that the electronic device can determine other high priority networks that the network device needs to search and have higher priority than the current resident network according to the current resident network and the preset network priority list. For example, it can be seen from the preset network priority list that the network to be searched corresponding to 2G is 3G/LTE/NR and other networks with higher priority than the priority of the 2G network in response to the current resident network being 2G. It can be seen from the preset network priority list that the network to be searched corresponding to 3G is LTE/NR and other networks with higher priority than the priority of the 3G network in response to the current resident network being 3G. The corresponding network to be searched is only the NR with higher priority than the priority of the LTE network in response to the current resident network being LTE.

Specifically, in some embodiments of the present disclosure, the electronic device can perform network search process after the second timer times out, that is, when the processing duration corresponding to the data service is greater than or equal to the preset time threshold. Specifically, the electronic device can perform the network search process in an order of priority from high to low.

Further, in some embodiments of the present disclosure, the electronic device can further process the data service through the obtained high priority network in response to the first processing duration being greater than or equal to the first preset time threshold after performing the network search process according to the preset network priority list.

At block 504, a first network is switched to and the data service is processed through the first network in response to the first network being obtained through the network search process. Priority of the first network is higher than the priority of the current resident network.

In some embodiments of the present disclosure, when the first processing duration is greater than or equal to the first preset time threshold, the electronic device can perform the network search process according to the preset network priority list. The electronic device can switch to the first network and process the data service through the first network in response to obtaining the first network through the network search process. In some embodiments, the priority of the first network is higher than the priority of the current resident network.

It should be noted that in some embodiments of the present disclosure, the first network can be the highest priority network, that is, a target network. Or the priority of the first network can be higher than the priority of the current resident network and lower than the priority of the target network. Or the electronic device has not obtained the first network through the network search process, that is, has not obtained any network with a priority higher than the priority of the current resident network.

Specifically, in some embodiments of the present disclosure, as long as the priority of the first network obtained is higher than the priority of the current resident network, the electronic device can switch to the first network and process the data service through the first network after the network search process is completed. Under these circumstances, the data service state changes from sleep to connected.

Specifically, in some embodiments of the present disclosure, the network search process will be ended after the first timer times out in response to the first network being not obtained through the network search process, that is, no network with a priority higher than the current resident network priority being obtained. Under these circumstances, the electronic device maintains the connection with the current resident network, and processes the data service through the current resident network. Under these circumstances, the data service state changes from sleep to connected.

Further, in some embodiments of the present disclosure, the network search timer and the second timer need to be stopped, instead of performing the network search process, when the data service is processed through the highest priority network in response to the highest priority network being obtained through the network search process. The highest priority network continues to be searched when the data service is processed in response to the first network obtained through the network search process being not the highest priority network, or the first network being not obtained. Under these circumstances, the network search timer and the second timer are still running, the corresponding processing duration of data service continues to be monitored through the second timer, and the network search process is performed again after the second timer times out, until the highest priority network is found.

For example, the network search process is performed in an order of priority from high to low. The electronic device will stop the network search process, and also stop the HPRAT timer and the second timer in response to the current resident network being a 3G network, the processing duration corresponding to the data service being greater than or equal to the preset time threshold corresponding to the 3G network, and the highest priority network NR being obtained through the network search process, to directly register to the NR and perform the network search process through NR. The network search process will be ended in response to the high priority network obtained being only the LTE network through the network search process. When the electronic device processes the data service through the LTE, since the LTE is not the highest priority network, the HPRAT timer and the second timer will still be running. After the second timer times out, the electronic device will perform the network search process again until the NR network is obtained through the network search process and switch to the NR network.

Similarly, the network search process will be ended after the second timer times out in response to the LTE/NR being not obtained through the network search process. The electronic device will continue to be connected to 3G and continue to perform the network search process through 3G. Further, the HPRAT timer and the second timer will still run in response to the data service being processed through 3G until the NR is obtained through the network search process and the NR network is switched to.

Further, in some embodiments of the present disclosure, the data service is in a connected state during the second timer being running. The second timer needs to be stopped immediately in response to the electronic device leaving the connected state and entering the sleep state or the dormant state during the second timer being running. That is, the data service is in the connected state, and the electronic device can transmit the data service during the second timer being running. The data service will not be transmitted in response to the electronic device entering the sleep state or the dormant state during the second timer being running, and thus the network search process will not be performed. The electronic device will perform the network search process after the second timer times out in response to the electronic device maintaining connected during the second timer being running, that is, the electronic device continuing to transmit the data service during the second timer being running.

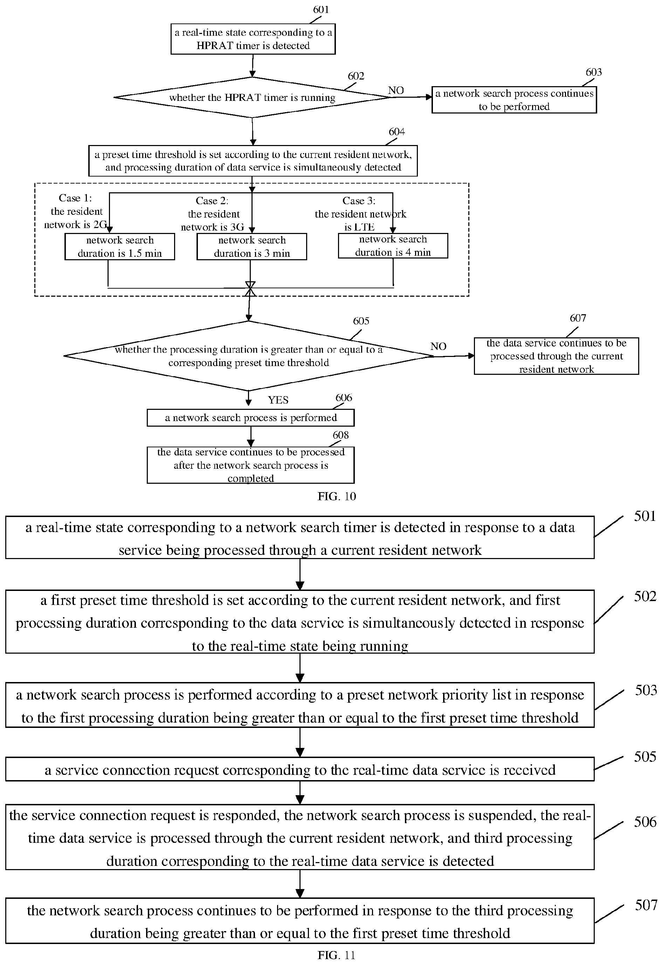

FIG. 10 is a schematic diagram 2 of a network search process provided by some embodiments of the present disclosure. As shown in FIG. 10, an electronic device first detects a real-time state corresponding to a HPRAT timer in response to processing the data service through a current resident network (operations at block 601); and determines whether the HPRAT timer is running (operations at block 602); continues to perform a network search process in response to the HPRAT timer being not running (operations at block 603), that is, continues to process the data service by the current resident network; sets a preset time threshold according to the current resident network, and simultaneously detects the processing duration of data service in response to the HPRAT timer being running (operations at block 604). In at least one embodiment, a corresponding preset time threshold is 1.5min in response to a resident network being 2G. The corresponding network search duration is 3 min in response to the resident network being 3G. The corresponding network search duration is 4 min in response to the resident network being LTE. Further, the electronic device determines whether the processing duration is greater than or equal to a corresponding preset time threshold (operations at block 605); and performs the network search process in response to the processing duration being greater than or equal to the corresponding preset time threshold (operations at block 606). For example, if the data service is currently processed through 2G, the electronic device performs the network search process in response to the corresponding processing duration of the data service being greater than or equal to 1.5 min. If the data service is currently processed through 3G, the electronic device will perform the network search process in response to the corresponding processing duration of the data service being greater than or equal to 3 min. If the data service is currently processed through LTE, the electronic device will perform the network search process in response to the corresponding processing duration of the data service being greater than or equal to 4 min. The electronic device continues to process the data service through the current resident network in response to the processing duration is less than the corresponding preset time threshold (operations at block 607), and continues to process the data service after the network search process is completed (operations at block 608). Specifically, the electronic device switches to the high priority RAT network to start processing the data service in response to finding a high priority RAT network. The electronic device continues to process the data service with the current resident network in response to not finding any high priority RAT network.

Some embodiments of the present disclosure provide a network search method. In the processing stage of the data service, that is, when the data service is processed through the current resident network, a network device simultaneously detects the corresponding processing duration of the data service on the current resident network in response to the electronic device detecting that the network search timer is running, forces to perform the network search process in response to the processing duration meeting the preset time threshold corresponding to the current resident network, and processes the data service by switching to the network obtained through the network search process with priority higher than the priority of the current resident network. That is, when the data service has been started, in order to prevent the data service from being carried on the current resident network for a long time, the network device forces to perform the network search process in response to the corresponding processing duration of the data service meeting the preset time threshold, thereby realizing high-frequency network search, improving the transmission efficiency in the data service process, and improving the performance of electronic device.

Based on the above embodiments, in other embodiments of the present disclosure, FIG. 11 is an implementation flow chart 5 of a network search method provided by some embodiments of the present disclosure. As shown in FIG. 11, if the first processing duration is greater than or equal to the first preset time threshold, after the network search process according to the preset network priority list, that is, after operations at block 503, the method for electronic device to perform network search can also include the following operations at blocks.

At block 505, a service connection request corresponding to the real-time data service is received.

In some embodiments of the present disclosure, when the first processing duration is greater than or equal to the first preset time threshold corresponding to the first network, the electronic device can receive the service connection request corresponding to the real-time data service during the network search process after performing the network search process according to the preset network priority list.

It should be noted that, in some embodiments of the present disclosure, the real-time data service is different from the data service previously processed through the current resident network. For example, the data service processed through the current resident network can be short message sending, and the real-time data service processed can be playing games. Or the data service processed through the current resident network can be WeChat chat, the real-time data service processed can be video downloads, or other completely different types of services. Or the data service processed through the current resident network is playing games, while the real-time data service processed is listening to music. Or the data service processed through the current resident network is QQ chat, the real-time data service processed is WeChat chat, or other data services of the same type but with different data contents.

In some embodiments of the present disclosure, after the second timer times out, the electronic device suspends processing the data service, and during the network search process, the electronic device can receive the data service request that comes at any time from the network terminal, that is, a service connection request corresponding to the real-time data service sent by a base station. For example, suppose that current time of playing games through 3G network is more than or equal to 3min, and the electronic device performs the network search process. During the network search process, the electronic device can receive the paging of other real-time data services sent by the base station at any time, such as receiving WeChat messages sent by others, and opening WeChat for chatting.

Further, in some embodiments of the present disclosure, the electronic device can further respond to the connection request and process the real-time data service after receiving the service connection request corresponding to the real-time data service.

At block 506, the service connection request is responded, the network search process is suspended, the real-time data service is processed through the current resident network, and third processing duration corresponding to the real-time data service is detected.

In some embodiments of the present disclosure, after receiving the service connection request corresponding to the real-time data service, the electronic device can respond to the connection request, and the electronic device can suspend the network search process being performed, that is, suspend the network search process, process the real-time data service through the first network, and simultaneously detect duration of the real-time data service carried on the first network, that is, the third processing duration.

Specifically, in some embodiments of the present disclosure, the electronic device can perform the search process one frequency point by one frequency point when performing the network search process. If the network search process is performed to a certain frequency point (such as a third frequency point) stage, and no high priority network is found, the electronic device receives the service connection request (such as the paging message of the real-time data service) of the real-time data service sent by the base station. Under these circumstances, the electronic device can suspend the network search process, and convert the data service state from the sleep state to the connected state, and then process the real-time data service based on the first network.

Further, when the real-time data service is processed through the first network, since the real-time data service is still processed through the low priority RAT network, when processing the real-time data service through the first network, the network search device continues to monitor the processing duration corresponding to the real-time data service through the second timer, that is, the time for monitoring the real-time data service through the first network.

Further, in some embodiments of the present disclosure, the electronic device can further compare the third processing duration and the first preset time threshold after the electronic device detects the third processing duration corresponding to the real-time data service, and determine time for performing the network search process again by comparing a result.

At block 507, the network search process continues to be performed in response to the third processing duration being greater than or equal to the first preset time threshold.

In some embodiments of the present disclosure, the electronic device can further compare the third processing duration and the first preset time threshold after the electronic device detects the third processing duration corresponding to the real-time data service. The electronic device can perform network search process again according to the preset network priority list in response to the third processing duration being greater than or equal to the first preset time threshold.

Specifically, in some embodiments of the present disclosure, the electronic device performs the network search process again after the second timer times out in response to the third processing duration being greater than or equal to the first preset time threshold, and the real-time data service being not completed. However, instead of starting a new network search processing, the electronic device continues the network search process that was suspended before the network search process was completed, that is, continues the network search process from the previous third frequency point stage.

Further, in some embodiments of the present disclosure, in response to the real-time data service having been completed before the third processing duration has reached the first preset time threshold, there is no need to wait for the second timer to time out, the electronic device directly performs the network search process. Similarly, instead of starting a new network search process, the electronic device continues the network search process that was suspended before the network search process was completed, that is, continues to perform the network search process from the previous third frequency point stage.

Some embodiments of the present disclosure provide a network search method. When the data service state is the continuing stage and the electronic device is performing the network search process, on the one hand, the network search process can be suspended by the data service connection request from the network terminal at any time, that is, the network search process is suspended; on the other hand, when a next network search process needs to be performed, the electronic device will continue the network search process that was suspended previously, instead of starting a new network search process, thereby not only preventing a long delay for processing the data service, but also improving the transmission efficiency in the data service process, and further improving the performance of electronic device.

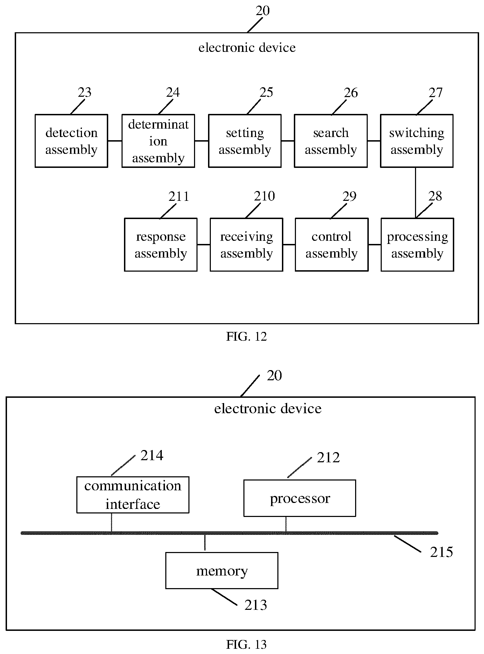

Based on the above embodiments, in other embodiments of the present disclosure, FIG. 12 is a structure schematic diagram 2 of an electronic device provided by some embodiments of the present disclosure. As shown in FIG. 12, the electronic device 20 provided by some embodiments of the present disclosure can include a detection assembly 23, a determination assembly 24, a setting assembly 25, a search assembly 26, a switching assembly 27, a processing assembly 28, a control assembly 29, a receiving assembly 210, and a response assembly 211.

The detection assembly 23 is configured to detect a real-time state corresponding to a network search timer in response to a data service being ready to be started.

The determination assembly 24 is configured to determine a current resident network in response to the real-time state being running.

The setting assembly 25 is configured to set network search duration according to the current resident network.

The search assembly 26 is configured to perform network search process according to the network search duration and a preset network priority list.

The switching assembly 27 is configured to switch to a first network in response to the first network being obtained through the network search process. Priority of the first network is higher than priority of the current resident network.

The processing assembly 28 is configured to process the data service through the first network.

In some embodiments, the network search timer is a high priority network HPRAT timer.

In some embodiments, the processing assembly 28 is also configured to process the data service directly through the current resident network in response to the real-time state being not running after the real-time state corresponding to the network search timer is detected when the data service is ready to be started.

In some embodiments, the search assembly 26 is specifically configured to determine a network to be searched according to the preset network priority list and the current resident network. Priority of the network to be searched is higher than the priority of the current resident network. the search assembly 26 is configured to perform the network search process through the network to be searched in an order of priority from high to low within the network search duration.

In some embodiments, the control assembly 29 is configured to stop the network search timer in response to the first network obtained through the network search process being a target network after the network search process is performed according to the network search duration and the preset network priority list. The target network is a network corresponding to a highest priority in the preset network priority list.

In some embodiments, the control assembly 29 is also configured to maintain the real-time state corresponding to the search timer as running in response to the first network obtained through the search processing being not the target network after the network search process is performed according to the network search duration and the preset network priority list.

In some embodiments, the setting assembly 25 is also configured to set a first preset time threshold according to the first network after maintaining the real-time state corresponding to the network search timer as running in response to the first network obtained through the network search process being not the target network.

In some embodiments, the detection assembly 23 is also configured to detect first processing duration corresponding to the data service.

In some embodiments, the search assembly 26 is also configured to perform the network search process again according to the preset network priority list in response to the first processing duration being greater than or equal to the first preset time threshold.

In some embodiments, the switching assembly 27 is also configured to switch to a second network in response to the second network being obtained through the network search process. Priority of the second network is higher than the priority of the first network.

In some embodiments, the processing assembly 28 is also configured to process the data service through the second network.

In some embodiments, the processing assembly 28 is also configured to process the data service through the current resident network and maintains the real-time state corresponding to the network search timer as running in response to the first network being not obtained through the network search process after the network search process is performed according to the network search duration and the preset network priority list.

In some embodiments, the setting assembly 25 is also configured to set a second preset time threshold according to the current resident network after the data service is processed through the current resident network, and the real-time state corresponding to the search timer is maintained as running in response to the first network being not obtained through the search processing.

In some embodiments, the detection assembly 23 is also configured to detect second processing duration corresponding to the data service.

In some embodiments, the search assembly 26 is also configured to perform the search processing again according to the preset network priority list in response to the second processing duration being greater than or equal to the second preset time threshold.

In some embodiments, the switching assembly 27 is also configured to switch to a third network in response to the third network is obtained through the network search process. Priority of the third network is higher than the priority of the current resident network.

In some embodiments, the processing assembly 28 is also configured to process the data service through the third network.

Based on the above embodiment, in other embodiments of the present disclosure, the detection assembly 23 is also configured to detect a real-time state corresponding to the network search timer when the data service is processed through the current resident network.

The setting assembly 25 is also configured to set a first preset time threshold according to the current resident network in response to the real-time state being running.

The detection assembly 23 is also configured to detect first processing duration corresponding to the data service.

The search assembly 26 is also configured to perform network search process according to the preset network priority list in response to the first processing duration being greater than or equal to the first preset time threshold.

The switching assembly 27 is also configured to switch to the first network in response to the first network being obtained through the network search process. The priority of the first network is higher than the priority of the current resident network.

The processing assembly 28 is also configured to process the data service through the first network.

In some embodiments, the processing assembly 28 is also configured to continue to process the data service through the current resident network in response to the real-time state being not running after the real-time state corresponding to the network search timer is detected when the data service is processed through the current resident network.

In some embodiments, the search assembly 26 is also specifically configured to determine the network to be searched according to the preset network priority list and the current resident network in response to the first processing duration being greater than or equal to the first preset time threshold The priority of the network to be searched is higher than the priority of the current resident network. the search assembly 26 is also specifically configured to perform the network search process on the network to be searched in an order of priority from high to low.

In some embodiments, the control assembly 29 is also configured to stop the network search timer in response to the first network obtained through the network search process being a target network after the network search process is performed according to the preset network priority list in response to the first processing duration being greater than or equal to the first preset time threshold. The target network is the network corresponding to a highest priority in the preset network priority list.

In some embodiments, the control assembly 29 is also configured to maintains the real-time state corresponding to the search timer as running in response to the first network obtained through the search processing being not the target network after the network search process is performed according to the preset network priority list in response to the first processing duration being greater than or equal to the first preset time threshold.

In some embodiments, the detection assembly 23 is also configured to simultaneously detect second processing duration corresponding to the data service.

In some embodiments, the search assembly 26 is also configured to perform the network search process again in response to the second processing duration being greater than or equal to the second preset time threshold corresponding to the first network.

In some embodiments, the processing assembly 28 is also configured to continue to process the data service through the current resident network in response to the first network being not obtained through the network search process after the network search process is performed according to the preset network priority list in response to the first processing duration being greater than or equal to the first preset time threshold.

In some embodiments, the receiving assembly 210 is configured to receive a service connection request corresponding to the real-time data service.

In some embodiments, the response assembly 211 is configured to respond to the service connection request and suspend performing the network search process.

In some embodiments, the processing assembly 28 is also configured to process a real-time data service through the current resident network.

In some embodiments, the detection assembly 23 is also configured to detect third processing duration corresponding to the real-time data service.

In some embodiments, the search assembly 26 is also configured to continue the network search process in response to the third processing duration being greater than or equal to the first preset time threshold.

In some embodiments of the present disclosure, further, FIG. 13 is a structure schematic diagram 3 of an electronic device provided by some embodiments of the present disclosure. As shown in FIG. 13, the electronic device 20 provided by some embodiments of the present disclosure can also include a processor 212, a memory 213 storing executable instructions of the processor 212. Further, the electronic device 20 can also include a communication interface 214, and a bus 215 configured to connect the processor 212, the memory 213 and the memory 213 and of the communication interface 214.

In some embodiments of the present disclosure, the above processor 212 can include at least one of an application specific integrated circuit (ASIC), a digital signal processor (DSP), a digital signal processing device (DSPD), a prog RAM logic device (PLD), a field prog RAM gate array (FPGA) central processing unit (CPU), a controller, a micro-controller and a micro-processor. It can be understood that for different devices, the electronic device used to realize the above processor functions can also be other, and the embodiments of the present disclosure are not specifically limited. The electronic device 20 may also include the memory 213 connected to the processor 212. The memory 213 is configured to store executable program codes, and the executable program codes include computer operation instructions. The memory 213 may also include a high-speed RAM memory, or a non-volatile memory, such as at least two disk memories.

In some embodiments of the present disclosure, the bus 215 is configured to connect the communication interface 214, the processor 212, the memory 213 and mutual communication between these components.

In some embodiments of the present disclosure, the memory 213 is configured to store instructions and data.

Further, in some embodiments of the present disclosure, the above processor 212 is configured to detect a real-time state corresponding to a network search timer in response to being ready to start a data service, determine the current resident network in response to the real-time state being running, set network search duration according to the current resident network, perform a network search process according to the network search duration and a preset network priority list, switch to the first network, and process the data service through the first network in response to obtaining the first network through the network search process. Priority of the first network is higher than priority of the current resident network.

Further, in some embodiments of the present disclosure, the above processor 212 is also configured to detect the real-time state corresponding to the network search timer in response to processing the data service through the current resident network, set a first preset time threshold according to the current resident network and simultaneously detect first processing duration corresponding to the data service in response to the real-time state being running, perform the network search process according to a preset network priority list in response to the first processing duration being greater than or equal to the first preset time threshold, switch to a first network, and process the data service through the first network in response to obtaining the first network through the network search process. Priority of the first network is higher than the priority of the current resident network.

In practical applications, the memory 213 can be a volatile memory, such as a random-access memory (RAM); or a non-volatile memory, such as a read only memory (ROM), a flash memory, a hard disk drive (HDD) or a solid state drive (SSD); or a combination of the above types of memories, and provide instructions and data to the processor 212.

In addition, each functional module in these embodiments can be integrated in a processing unit, or each unit can exist physically independently, or two or more units can be integrated in a unit. The integrated unit mentioned above can be realized in the form of hardware or software functional modules.

If the integrated unit is realized in the form of a software functional unit and not sold or used as an independent product, the integrated unit can be stored in a computer readable memory. Therefore, the technical solution of the present disclosure can be embodied in a form of a software product. The software product is stored in a memory, including several instructions, so that a computer device (such as a personal computer, a server, a network device, etc.) can perform all or part of the operations of the methods provided by the above embodiments of the present disclosure. The above mentioned memory may include flash disk, read-only memory (ROM), random access memory (RAM), mobile hard disk, disk or CD and other media that can store program codes.

Some embodiments of the present disclosure provide an electronic device. The electronic device detects a real-time state corresponding to the network search timer in response to being ready to start a data service; determines a current resident network in response to the real-time state is running; sets network search duration according to the current resident network, and perform network search process according to the network search duration and a preset network priority list; switches to a first network with priority higher than priority of the current resident network and processes the data service through the first network in response to obtaining the first network through the network search process; detects a real-time state corresponding to the network search timer in response to processing the data service through the current resident network; sets a first preset time threshold according to the current resident network and simultaneously detects first processing duration corresponding to the data service in response to the real-time state being running; performs the network search process according to the preset network priority list in response to the first processing duration being greater than or equal to the first preset time threshold; and switches to the first network, and processes the data service through the first network in response to obtaining the first network through the network search process. The priority of the first network is higher than the priority of the current resident network.

That is to say, in some embodiments of the present disclosure, when the data service is ready to be started, the electronic device first performs the network search process, and starts processing the data service through the high priority network obtained by performing the network search process. When the data service has started, in order to prevent the data service from being carried on the current resident network for a long time, the electronic device performs the network search process when the corresponding processing duration of the data service meets the preset time threshold, and continues to process the data service through the high priority network obtained through the network search process, thereby realizing high frequency network search, improving the transmission efficiency in the data service process, further improving the performance of electronic device, and enhancing the user experience.

Some embodiments of the present disclosure provide a chip. The chip includes a programmable logic circuit and/or program instructions. When the chip is running, the network search method described above is implemented. Specifically, the network search method includes: detecting a real-time state corresponding to a network search timer in response to a data service being ready to be started; determining a current resident network in response to the real-time state being running; setting network search duration according to the current resident network, and performing a network search process according to the network search duration and a preset network priority list; switching to a first network, and processing the data service through the first network in response to obtaining the first network through the network search process. Priority of the first network is higher than priority of the current resident network.

Specifically, the network search method can also include: detecting the real-time state corresponding to the network search timer in response to processing the data service through the current resident network; setting a first preset time threshold according to the current resident network, and simultaneously detecting first processing duration corresponding to the data service in response to the real-time state is running; performing a network search process according to the preset network priority list in response to the first processing duration being greater than or equal to the first preset time threshold; switching to a first network, and processing the data service through the first network in response to obtaining the first network through the network search process. The priority of the first network is higher than the priority of the current resident network.

Some embodiments of the present disclosure provide a computer-readable storage medium on which a program is stored. When the program is executed by a processor, the network search method described above is implemented.

Specifically, the program instructions corresponding to a network search method in some embodiments can be stored on an optical disk, a hard disk, a U disk or other storage media. When the program instructions corresponding to a network search method in the storage media are read or executed by an electronic device, the method includes: detecting a real-time state corresponding to a network search timer in response to a data service being ready to be started; determining a current resident network in response to the real-time state being running; setting network search duration according to the current resident network, and performing a network search process according to the network search duration and a preset network priority list; switching to a first network, and processing the data service through the first network in response to obtaining the first network through the network search process. Priority of the first network is higher than priority of the current resident network.

Further, when the program instructions corresponding to the network search method in the storage medium are read or executed by the electronic device, the network search method can also include: detecting the real-time state corresponding to the network search timer in response to processing the data service through the current resident network; setting a first preset time threshold according to the current resident network, and simultaneously detecting first processing duration corresponding to the data service in response to the real-time state is running; performing a network search process according to the preset network priority list in response to the first processing duration being greater than or equal to the first preset time threshold; switching to a first network, and processing the data service through the first network in response to obtaining the first network through the network search process. The priority of the first network is higher than the priority of the current resident network.

Those skilled in the art should understand that embodiments of the present disclosure can be provided methods, systems, or computer program products. Therefore, the present disclosure may take the form of hardware embodiments, software embodiments, or embodiments combining software and hardware aspects. Furthermore, the present disclosure may take the form of a computer program product implemented on one or more computer usable storage media (including but not limited to a disk memory, an optical memory, etc.) containing computer usable program codes.

The present disclosure is described with reference to the implementation flow chart and/or block diagram of the method, device (system), and computer program product according to some embodiments of the present disclosure. It should be understood that each flow and/or block in the flow chart and/or block diagram can be realized by computer program instructions, and the combination of flow and/or block diagrams in the flow chart and/or block diagram can be realized. These computer program instructions may be provided to a processor of a general purpose computer, a special purpose computer, an embedded processor, or other programmable data processing device to generate a machine, such that instructions executed by the processor of the computer or other programmable data processing device generate devices for implementing functions specified in one or more processes of flow charts and/or one or more blocks of the block diagrams.

These computer program instructions can also be stored in a computer-readable memory that can guide a computer or other programmable data processing device to work in a specific way, such that the instructions stored in the computer-readable memory generate a manufacture including an instruction device that realizes the functions specified in one or more processes of flow charts and/or one or more blocks of the block diagrams.

These computer program instructions can also be loaded onto a computer or other programmable data processing device, such that a series of operations can be performed on the computer or other programmable device to generate a computer implemented process. Thus, the instructions executed on a computer or other programmable device provide steps for implementing the functions specified in one or more processes of flow charts and/or one or more blocks of the block diagrams.

The above description is only preferred embodiments of the present disclosure and is not intended to limit the scope of protection of the present disclosure.

### Industrial applicability

In some embodiments of the present disclosure, the electronic device detects a real-time state corresponding to a network search timer in response to a data service being ready to be started; determines a current resident network in response to the real-time state being running; sets network search duration according to the current resident network, and performs a network search process according to the network search duration and a preset network priority list; switches to a first network, and processes the data service through the first network in response to obtaining the first network through the network search process. Priority of the first network is higher than priority of the current resident network. High frequency network search is realized. Transmission efficiency in the data service process is improved. Terminal performance. Is further improved.

## Claims

1. A network search method, comprising:
detecting a real-time state corresponding to a network search timer in response to a data service being ready to be started;
determining a current resident network in response to the real-time state being running;
setting network search duration according to the current resident network, and performing a network search process according to the network search duration and a preset network priority list; and
switching to a first network, and processing the data service through the first network in response to obtaining the first network through the network search process; wherein priority of the first network is higher than priority of the current resident network.

2. The method as claimed in claim 1, wherein the network search timer is a high priority network HPRAT timer.

3. The method as claimed in claim 1, wherein after the detecting a real-time state corresponding to a network search timer in response to a data service being ready to be started, the method further comprises:
directly processing the data service through the current resident network in response to the real-time state being not running.

4. The method as claimed in claim 1, wherein the performing a network search process according to the network search duration and a preset network priority list, comprises:
determining a network to be searched according to the preset network priority list and the current resident network; wherein priority of the network to be searched is higher than the priority of the current resident network; and
performing the network search process in an order of priority from high to low during the network search duration.

5. The method as claimed in claim 1 or 4, wherein after the performing a network search process according to the network search duration and a preset network priority list, the method further comprises:
stopping the network search timer in response to the first network obtained through the network search process being a target network; wherein the target network is a network corresponding to highest priority in the preset network priority list.

6. The method as claimed in claim 5, wherein after the performing a network search process according to the network search duration and a preset network priority list, the method further comprises:
maintaining the real-time state corresponding to the network search timer as running in response to the first network obtained through the network search process being not the target network.

7. The method as claimed in claim 6, wherein after the maintaining the real-time state corresponding to the network search timer as running in response to the first network obtained through the network search process being not the target network, the method further comprises:
setting a first preset time threshold according to the first network, and simultaneously detecting first processing duration corresponding to the data service;
performing the network search process again according to the preset network priority list in response to the first processing duration being greater than or equal to the first preset time threshold; and
switching to a second network, and processing the data service through the second network in response to obtaining the second network through the network search process; wherein priority of the second network is higher than the priority of the first network.

8. The method as claimed in claim 1, wherein after the performing a network search process according to the network search duration and a preset network priority list, the method further comprises:
processing the data service through the current resident network, and maintaining the real-time state corresponding to the network search timer as running in response to not obtaining the first network through the network search process.

9. The method as claimed in claim 8, wherein after the processing the data service through the current resident network, and maintaining the real-time state corresponding to the network search timer as running in response to not obtaining the first network through the network search process, the method further comprises:
setting a second preset time threshold according to the current resident network, and simultaneously detecting second processing duration corresponding to the data service;
performing the network search process is again according to the preset network priority list in response to the second processing duration being greater than or equal to the second preset time threshold; and
switching to a third network, and processing the data service through the third network in response to obtaining the third network through the network search process; wherein priority of the third network is higher than the priority of the current resident network.

10. A network search method, comprising:
detecting a real-time state corresponding to a network search timer in response to processing a data service through a current resident network;
setting a first preset time threshold according to the current resident network, and simultaneously detecting first processing duration corresponding to the data service in response to the real-time state is running;
performing a network search process according to a preset network priority list in response to the first processing duration being greater than or equal to the first preset time threshold; and
switching to a first network, and processing the data service through the first network in response to obtaining the first network through the network search process; wherein priority of the first network is higher than priority of the current resident network.

11. The method as claimed in claim 10, wherein the network search timer is a HPRAT timer.

12. The method as claimed in claim 10, wherein after the detecting a real-time state corresponding to a network search timer in response to processing a data service through a current resident network, the method further comprises:
continuing to process the data service through the current resident network in response to the real-time state being not running.

13. The method as claimed in claim 10, wherein the performing a network search process according to a preset network priority list in response to the first processing duration being greater than or equal to the first preset time threshold, comprises:
determining a network to be searched according to the preset network priority list and the current resident network in response to the first processing duration being greater than or equal to the first preset time threshold; wherein priority of the network to be searched is higher than the priority of the current resident network; and
performing the network search process on the network to be searched in an order of priority from high to low.

14. The method as claimed in claim 10 or 12, wherein after the performing a network search process according to the preset network priority list in response to the first processing duration being greater than or equal to the first preset time threshold, the method further comprises:
stopping the network search timer in response to the first network obtained through the network search process being a target network; wherein the target network is a network corresponding to highest priority in the preset network priority list.

15. The method as claimed in claim 14, wherein after the performing a network search process according to the preset network priority list in response to the first processing duration being greater than or equal to the first preset time threshold, the method further comprises:
maintaining the real-time state corresponding to the network search timer as running, and simultaneously detecting second processing duration corresponding to the data service in response to the first network obtained through the network search process being not the target network;
performing the network search process is again in response to the second processing duration being greater than or equal to a second preset time threshold corresponding to the first network.

16. The method as claimed in claim 10, wherein after the performing a network search process according to the preset network priority list in response to the first processing duration being greater than or equal to the first preset time threshold, the method further comprises:
continuing to process the data service through the current resident network in response to not obtaining the first network through the network search process.

17. The method as claimed in claim 10, wherein after the performing a network search process according to the preset network priority list in response to the first processing duration being greater than or equal to the first preset time threshold, the method further comprises:
receiving a service connection request corresponding to a real-time data service;
responding to the service connection request, suspending the network search process, processing the real-time data service through the current resident network, and detecting third processing duration corresponding to the real-time data service;
continuing to performing the network search process in response to the third processing duration being greater than or equal to the first preset time threshold.

18. An electronic device, comprising:
a detection assembly configured to detect a real-time state corresponding to a network search timer in response to a data service being ready to be started;
a determination assembly configured to determine a current resident network in response to the real-time state being the running state;
a setting assembly configured to set network search duration according to the current resident network;
a search assembly configured to perform a network search process according to the network search duration and a preset network priority list;
a switching assembly configured to switch to a first network in response to the first network being obtained through the network search process; wherein priority of the first network is higher than priority of the current resident network; and
a processing assembly configured to process the data service through the first network.

19. An electronic device, wherein the electronic device comprises a detection assembly, a setting assembly, a search assembly, a switching assembly and a processing assembly; and
the detection assembly is configured to detect a real-time state corresponding to a network search timer in response to the data service being processed through the current resident network;
the setting assembly is configured to set a first preset time threshold according to the current resident network in response to the real-time state is running;
the detection assembly is configured to detect first processing duration corresponding to the data service;
the search assembly is configured to perform a network search process according to a preset network priority list in response to the first processing duration being greater than or equal to the first preset time threshold;
the switching assembly is configured to switch to the first network in response to the first network being obtained through the network search process; wherein priority of the first network is higher than priority of the current resident network; and
the processing assembly is configured to process the data service through the first network.

20. An electronic device, comprising a processor and a memory storing executable instructions of the processor, wherein when the instructions are executed by the processor, the method as claimed in any one of claims 1-9 or 10-17 is implemented.

21. A chip, comprising programmable logic circuits and/or program instructions, wherein when the chip is running, the network search method as claimed in any one of claims 1-9 or 10-17 is implemented.

22. A computer-readable storage medium on which a program is stored and applied to an electronic device, wherein when the program is executed by a processor, the method as claimed in any one of claims 1-9 or 10-17 is implemented.
